# EUROPEAN PATENT SPECIFICATION

(11) **EP 0 882 749 B1**
(45) Date of publication and mention of the grant of the patent: **24.03.2004**
(21) Application number: 98110038.1
(22) Date of filing: 02.06.1998
(51) Int. Cl.: C08G 18/42, C08G 18/28, C08G 18/12, C09J 175/06, C09J 175/16, C08G 18/10, C08G 18/67

(54) **Urethane prepolymer, process for producing the same and pressure-sensitive adhesive comprising the same**
Urethanpräpolymer, Verfahren zu dessen Herstellung und dieses enthaltender druckempfindlicher Klebstoff
Prepolymère d'uréthane, son procédé de préparation et adhésif sensible à la pression le contenant

(30) Priority: 03.06.1997 JP 14513997
(43) Date of publication of application: 09.12.1998
(73) Proprietor: Kyoeisha Chemical Co., Ltd., Osaka-shi, Osaka (JP); NITTO DENKO CORPORATION, Osaka (JP)
(72) Inventor: Ikeda, Junichi, 2-5, Saikujo-cho 5-chome, Nara-shi, Nara (JP); Kume, Katsuya, Ibaraki-shi, Osaka (JP)
(74) Representative: Grünecker, Kinkeldey, Stockmair & Schwanhäusser Anwaltssozietät

(56) References cited:
- EP-A- 0 305 175
- EP-A- 0 539 030
- US-A- 4 820 745

## Description

The present invention relates to an urethane prepolymer which is crosslinked with an active energy ray to exert a pressure-sensitive adhesive properties, a process for producing the urethane prepolymer, and a pressure-sensitive adhesive comprising the urethane prepolymer.

Pressure-sensitive adhesives constitute, for example, an adhesive face of a pressure-sensitive adhesive tape, and comprises acrylic or rubber polymers having a high molecular weight of, for example, several ten thousands to several millions. These polymers are dissolved in solvents and, after optionally adding other components such as tackifiers, applied onto substrates made of, for example, vinyl tapes. After completion of the application, the solvents are evaporated to remain the polymers. The polymers thus remained are dried to thereby obtain a pressure-sensitive adhesive face having a tackiness. In the production of those pressure-sensitive adhesives, there arises a problem that the solvents needed for the dissolution of the polymers scatter in a large amount into the atmosphere during the application step. Therefore, it has been required to use an apparatus for recovering the solvents scattered.

On the other hand, investigations have been made to use crosslinkable urethane resins as a pressure-sensitive adhesive which can apply components of pressure-sensitive adhesives onto substrates without using solvents.

However, any of the conventional pressure-sensitive adhesives using crosslinkable urethane resins have not been provided with fundamental properties required as pressure-sensitive adhesives in good balance.

### SUMMARY OF THE INVENTION

Accordingly, the present invention has been made to overcome the above-described disadvantages.

One object of the present invention is to provide novel urethane prepolymers which can apply onto a substrate without using a solvent.

Another object of the present invention is to provide processes for producing the urethane prepolymers.

Further object of the present invention is to provide pressure-sensitive adhesives comprising the urethane prepolymers, which has adhesive strength and holding power in good balance and can exert sufficient pressure-sensitive adhesive properties even in low temperature region.

The urethane prepolymer according to one embodiment of the present invention, developed to achieve the above-described object is represented by the following formula [I]:

d-c-(a-c)ₖ-e [I]

wherein k is from 4 to 100; a represents a polyester group having a number average molecular weight of 1 x 10³ to 5 x 10³; c represents an organic isocyanate group; d represents a monool having at least one functional group selected from the group consisting of hydroxyl group, carboxyl group, (meth)acryloyl group and vinyl group; and e is a monool, which is the same as or different from d, having a number average molecular weight of 5 x 10³ to 5 x 10⁵.

The urethane prepolymer according to another embodiment of the present invention, developed to achieve the above-described object is represented by the following formula [II]:

d-c-(a-c)ₙ-(b-c)ₘ-(a-c)ₗ-e [II]

wherein n and l each are from 2 to 50; m is from 1 to 50; a represents a polyester group having a number average molecular weight of 1 x 10³ to 5 x 10³; b represents at least one divalent group selected from the group consisting of dimaines and diols; c represents an organic isocyanate group; d represents a monool having at least one functional group selected from the group consisiting of hydroxyl group, carboxyl group, (meth)acryloyl group and vinyl group; and e is a monool, which is the same as or different from d, having a number average molecular weight of 5 x 10³ to 5 x 10⁵.

The process for producing the urethane prepolymer according to one embodiment of the present invention, developed to achieve the above-described object comprises forming a prepolymer comprising a repeating unit formed by polyaddition reaction of the polyester group a and the organic isocyanate group c and having organic isocyanate groups c at both ends thereof; and adding the monool d having at least one functional group selected from the group consisting of hydroxyl group, carboxyl group, (meth)acryloyl group and vinyl group to the organic isocyanate group at one end of the prepolymer, and another monool e, which is the same as or different from the monool d, to the organic isocyanate group at another end of the prepolymer, thereby forming the urethane prepolymer represented by the above formula [I].

The process for producing the urethane prepolymer according to another embodiment of the present invention, developed to achieve the above-described object comprises adding a repeating unit formed by polyaddition reaction of the polyester group a and the organic isocyanate group c to both ends of another repeating unit formed by polyaddition reaction of the organic isocyanate group c and the group b selected from the group consisting of diamines and diols, to thereby form a polymer having the organic isocyanate groups c at both ends thereof; and adding the monool d having at least one functional group selected from the group consisting of hydroxyl group, carboxyl group, (meth)acryloyl group and vinyl group to the organic isocyanate group at one end of the polymer, and another monool e, which is the same as or different from the monool d, to the organic isocyanate group at another end of the polymer, to thereby obtain the urethane prepolymer represented by the above formula [II].

The pressure-sensitive adhesive of the present invention, developed to achieve the above-described object comprises, as a main component, a polymer prepared by crosslinking the urethane prepolymer represented by the above formula [I] or [II], thereby increasing its molecular weight.

### DETAILED DESCRIPTION OF THE INVENTION

It is preferable that the polyester group having a number average molecular weight of 1 x 10³ to 5 x 10³ as component a is at least one member selected from the group consisting of groups represented by the following formulae:

-[OC₃₄H₆₆COORO]ⱼ-

and

-[OC₃₄H₆₈COORO]ⱼ-

wherein R represents an alkylene group having 2 to 36 carbon atoms; and j is an integer determined by the number average molecular weight of the polyester group.

It is preferable that the organic isocyanate group of compoenent c is at least one member selected from the group consisting of isophorone diisocyanate group, hexamethylene diisocyanate group, norbornane diisocyanate group, tolylene diisocyanate group, xylylene diisocyanate group, trimethylhexamethylene diisocyanate group, hydrogenated xylylene diisocyanate group, hydrogenated diphenylmethane diisocyanate group and diphenylmethane diisocyanate group.

It is preferable that the monool of compoenent d is at least one member selected from the group consisting of hydroxyalkyl (meth)acrylates, hydroxyalkyl vinyl ethers, carboxyl group-containing monoalcohols, lauryl alcohol and isooctanol.

It is preferable that the monool of component e is at least one member selected from the group consisting of hydroxyalkyl (meth)acrylates, hydroxyalkyl vinyl ethers, carboxyl group-containing monoalcohols, lauryl alcohol, isooctanol, straight-chain alkyl alcohols represented by the formula C_{q}H_{2q+1}OH (wherein q is from 1 to 18), isoalkyl alcohols, secondary alkyl alcohols, tertiary alkyl alcohols, and hydroxyl group-containing phenylketones, such as 1-hydroxycyclohexylphenyl ketone and 4-(2-hydroxyethoxy)phenyl-(2-hydroxy-2-propyl) ketone.

It is preferable that the diamine of componenet b is at least one member selected from the group consisting of diaminopropane, diaminobutane, nonanediamine, isophoronediamine, hexamethylenediamine, hydrogenated diphenylmethanediamine, bisaminopropyl ether, bisaminopropylethane, bisaminopropyl diethylene glycol ether, bisaminopropyl polyethyleneglycol ether, bisaminopropoxyneopentyl glycol, diphenylmethanediamine, xylylenediamine, toluenediamine and both end-amino-modified silicone.

It is preferable that the diol of component b is at least one member selected from the group consisting of ethylene glycol, polyethylene glycol, propylene glycol, polypropylene glycol, butylene glycol, polytetramethylene glycol, pentanediol, hexanediol, both end-hydroxyl-modified silicone and carboxyl group-containing diols.

The urethane prepolymer represented by the above formula [I] or [II] is crosslinked in the presence of at least one member selected from the group consisting of crosslinking agents, polymerization initiators and active energy.

The active energy includes ultraviolet light, visible light and heat.

Where the monools d and/or e in the urethane prepolymers of the above formula [I] or [II] are hydroxyalkyl (meth)acrylates, it is preferable that the crosslinking is performed under irradiation with light in the presence of a photoradical polymerization initiator. Example of the photoradical polymerization initiator include hydroxycyclohexylphenyl ketone, 1-phenyl-2-hydroxy-2-methylpropan-1-one, 2,2-dimethoxy-2-phenylacetophenone, benzophenone, 2-methyl[4-(methylthio)phenyl]-2-morpholino-1-propanone, 2-hydroxy-2-methyl-1-phenylpropan-1-one, 1-(4-isopropylphenyl)-2-hydroxy-2-methylpropan-1-one, 4-(2-hydroxyethoxy)phenyl-(2-hydroxy-2-propyl)ketone, 4-(2-acryloyloxyethoxy)phenyl-(2-hydroxy-2-propyl)ketone,4-(2-methacryloyloxyethoxy)phenyl-(2-hydroxy-2-propyl)ketone and 2,4,6-trimethylbenzoyldiphenylphosphine oxide.

Alternatively, the crosslinking may be performed under heating in the presence of a heat polymerization initiator, for example, dilauroyl peroxide, dibutyl peroxide, dicumyl peroxide, t-butylcumyl peroxide, α,α-bis(t-butylperoxy-m-isopropyl)benzoate or 2,5-dimethyl-2,5-di(t-butylperoxy)-hexane, as a polymerization initiator. Thus, the (meth)-acryloyl groups undergo polymerization, causing crosslinking and increasing the molecular weight. As a result, a material appropriate as pressure-sensitive adhesives is formed.

Where the monools d and/or e in the urethane prepolymer are hydroxyalkyl vinyl ethers, it is preferable that the crosslinking is effected under light irradiation in the presence of a radiation induced cationic polymerization initiator, such as aromatic sulfonium salts, p-hydroxyphenyl benzylmethylsulfonium salt or p-methoxycarbonyloxyphenyl dimethylsulfonium salt, as a polymerization initiator. Thus, the vinyl groups or epoxy groups -undergo polymerization, causing crosslinking and increasing the molecular weight.

Where the monools d and/or e in the urethane prepolymer are carboxyl group-containing monoalcohols or the group b is a carboxyl group-containing diol such as dimethylolpropionic acid (HOCH₂CH(COOH)CH₂OH), the crosslinking is performed using an epoxy compound as a crosslinking agent. Examples of the epoxy compound are bisphenol A-diglycidyl ether, hydrogenated bisphenol A-diglycidyl ether, bisphenol F-diglycidyl ether, hydrogenated bisphenol F-diglycidyl ether, bisphenol S-diglycidyl ether, hydrogenated bisphenol S-diglycidyl ether, phthalic acid-diglycidyl ether, hydrogenated phthalic acid-diglycidyl ether, ethylene glycol-diglycidyl ether, diethylene glycol-diglycidyl ether, triethylene glycol-diglycidyl ether, tetraethylene glycol-diglycidyl ether, polyethylene glycol-diglycidyl ether, propylene glycol-diglycidyl ether, dipropylene glycol-diglycidyl ether, tripropylene glycol-diglycidyl ether, polypropylene glycol-diglycidyl ether, butanediol diglycidyl ether, polytetraethylene glcyol #250-diglycidyl ether, hexanediol diglycidyl ether, nonanediol diglycidyl ether, phenol novolak epoxide and cresol novolak epoxide. This epoxy-crosslinking may be carried out by adding dimethylbenzylamine as a catalyst, and heating.

Where the group b in the urethane prepolymer of the formula [II] is diamines, the crosslinking is performed by adding as a crosslinking agent a polyisocyanate such as hexamethylene diisocyanate trimer, isophorone diisocyanate trimer or crude MDI (diphenylmethane diisocyanate), and heating. Thus, the diamine b reacts with the isocyanate group -NCO to thereby form a secondary amine -NH- followed by crosslinking and polymerization.

The urethane prepolymers of the present invention are practically produced by the following methods.

A polyester polyol having the above-described polyester group a can be obtained by, for example, mixing a dimer acid with 1,6-hexanediol, linear HOOC-(CH₂)₃₄-COOH with a dimer diol, or a dimer acid with a dimer diol, followed by esterification.

7 mol of the polyester polyol thus obtained is then mixed with 8 mol of an organic isocyanate. After optionally adding an antioxidant such as di-t-butyl-hydroxyphenol and/or a catalyst such as dibutyltin dilaurylate, the resulting mixture is heated to 80 to 100°C for 3 hours or longer. After cooling, 1 mol of the monool d having a functional group and 1 mol of the monool e are further added and the resulting mixture is heated to 80 to 85°C for 4 hours or longer. Completion of the reaction is confirmed by the disappearance of a peak at 2,280 cm⁻¹ assignable to the isocyanate group in the infrared absorption spectrum. Thus, an urethane prepolymer is synthesized.

This urethane prepolymer is a viscous liquid having a number average molecular weight of 5 x 10³ to 5 x 10⁵, and can be applied to substrates or subjects as it is. The urethane prepolymer is then crosslinked using appropriate crosslinking agents, polymerization initiators, polymerization catalysts and active energy, which are selected depending on the functional groups in the urethane prepolymer, to increase the molecular weight, making the prepolymer in a semi-cured state. The prepolymer thus obtained exhibits pressure-sensitive adhesive properties, and a pressure-sensitive adhesive is obtained.

The present invention will now be described in more detail by reference to the following examples, but it should be understood that the invention is not construed as being limited thereto.

In each of Examples 1 to 14, a pressure-sensitive adhesive of the present invention was produced from an urethane prepolymer of the present invention produced by the process according to the present invention, and the performances of the pressure-sensitive adhesive were evaluated. On the other hand, Comparative Example shows an embodiment outside the scope of the present invention.

### EXAMPLE 1

156.1 g of a polyester polyol (hydroxyl value: 53.3, number average molecular weight: 2,100), which had been obtained by esterifying a highly pure hydrogenated dimer acid having 36 carbon atoms with 1,6-hexanediol, 21.9 g of isophorone diisocyanate (IPDI), 0.03 g of di-t-butyl-hydroxyphenol (BHT) as an antioxidant and 0.02 g of dibutyltin dilaurylate (DBTL) were fed into a 1 liter four-necked flask equipped with a stirrer, a condenser and a thermometer, and the resulting mixture was reacted at 100°C for 4 hours. After cooling the reaction mixture to 80°C, 2.9 g of 2-hydroxyethyl acrylate (2-HEA), 6.1 g of lauryl alcohol and 0.0374 g of p-methoxyphenol as a heat polymerization inhibitor were added thereto, and the resulting mixture was reacted at 85°C for 5 hours. Completion of the reaction was confirmed by the disappearance of a peak at 2,280 cm⁻¹ assignable to the isocyanate group in the infrared absorption spectrum. Thus a liquid urethane prepolymer was obtained.

When a number average molecular weight of this prepoymer was determined using gel-packed liquid chromatography (GPC) ("GPC-1" manufactured by Showa Denko K.K.), it was found to be 0.9 x 10⁴ g, calculated as a polystyrene basis.

To 97 g of the urethane prepolymer obtained above was added 3.0 g of 1-phenyl-2-hydroxy-2-methylpropan-1-one (HMPP; "IRGACURE #1173", trade name) as a photopolymerization initiator. After thoroughly mixing, the resulting mixture was applied onto a polyethylene terephthalate film having a thickness of 25 µm as a substrate film at a coating build-up of 30 µm. The coated surface of the substrate film was covered with a polyethylene terephthalate film having a thickness of 50 µm as a release film. The composite material thus formed was put on a conveyer driven at a speed of 6 m/min and irradiated with a high-pressure mercury lamp (80 W/cm) located 10 cm above to thereby perform crosslinking the mixture, resulting in increase of the molecular weight thereof. Thus the mixture was semi-cured and showed pressure-sensitive adhesive properties. As a result, an adhesive tape composed of the substrate film, the pressure-sensitive adhesive layer formed thereon and the release film covering the pressure-sensitive adhesive layer was obtained.

A glass transition temperature of the pressure-sensitive adhesive layer was measured with a differential scanning calorimetry (DSC), and it was found to be -43.7°C. The pressure-sensitive adhesive tape thus obtained was evaluated on an adhesive strength and a holding power of adhesiveness. To evaluate the adhesive strength, a peeling test was carried out three times in accordance with JIS Z 0237 and the mean value was determined. To evaluate the holding power, a dropping test was carried out similarly in accordance with JIS Z 0237. In this test, the time until dropping a weight was measured three times and the mean value was determined. Moreover, the ball No. was measured in accordance with JIS Z 0237. As a result, the pressure-sensitive adhesive showed an adhesive strength of 915 g/25 mm, a holding power of 1,000 min. at 40°C and a ball No. of 10.

### EXAMPLE 2

315.8 g of a polyester polyol (hydroxyl value: 53.1, number average molecular weight: 2,100), which had been obtained by esterifying a highly pure.hydrogenated dimer acid with 1,6-hexanediol, 44.4 g of IPDI, 0.075 g of BHT and 0.04 g of DBTL were fed into a 1 liter four-necked flask equipped with a stirrer, a condenser and a thermometer, and the resulting mixture was reacted at 100°C for 4 hours. After cooling the reaction mixture to 80°C, 5.8 g of 2-HEA, 6.8 g of isooctanol and 0.075 g of p-methoxyphenol were added thereto and the resulting mixture was reacted at 85°C for 5 hours to thereby obtain a liquid urethane prepolymer. Using this liquid urethane prepolymer, a pressure-sensitive adhesive tape was obtained in the same manner as in Example 1. The adhesive tape was also evaluated in the same manners as in Example 1. The results obtained are shown in the Table below.

### EXAMPLE 3

182.4 g of the same polyester polyol as obtained in Example 1, 22.2 g of IPDI, 0.0374 g of BHT and 0.02 g of DBTL were fed into a 1 liter four-necked flask equipped with a stirrer, a condenser and a thermometer, and the resulting mixture was reacted at 100°C for 4 hours. After cooling the reaction mixture to 80°C, 2.9 g of 2-HEA and 0.0374 g of p-methoxyphenol were added thereto and the resulting mixture was reacted at 85°C for 5 hours to thereby obtain a liquid urethane prepolymer. Using this liquid urethane prepolymer, a pressure-sensitive adhesive tape was obtained in the same manner as in Example 1. The adhesive tape thus obtained was also evaluated in the same manners as in Example 1. The results obtained are shown in the Table below.

### EXAMPLE 4

A liquid urethane prepolymer was obtained in the same manner as in Example 1 except for using 4.3 g of 2-HEA and replacing the lauryl alcohol with 1.7 g of isooctanol. Using this liquid urethane prepolymer, a pressure-sensitive adhesive tape was obtained in the same manner as in Example 1. The adhesive tape thus obtained was also evaluated in the same manners as in Example 1. The results obtained are shown in the Table below.

### EXAMPLE 5

282.5 g of the same polyester polyol as obtained in Example 1, 11.1 g of IPDI, 41.7 g of hexamethylene diisocyanate trimer, 0.068 g of BHT and 0.02 g of DBTL were fed into a 1 liter four-necked flask equipped with a stirrer, a condenser and a thermometer, and the resulting was reacted at 100°C for 4 hours. After cooling the reaction mixture to 80°C, 1.4 g of 2-HEA, 5.2 g of isooctanol and 0.068 g of p-methoxyphenol were added thereto and the resulting mixture was reacted at 85°C for 5 hours to thereby obtain a liquid urethane prepolymer. Using this liquid urethane prepolymer, a pressure-sensitive adhesive tape was obtained in the same manner as in Example 1. The adhesive tape thus obtained was also evaluated in the same manners as in Example 1. The results obtained are shown in the Table below.

### EXAMPLE 6

182.4 g of the same polyester polyol as obtained in Example 1, 22.2 g of IPDI, 0.0374 g of BHT and 0.02 g of DBTL were fed into a 1 liter four-necked flask equipped with a stirrer, a condenser and a thermometer, and the resulting mixture was reacted at 100°C for 4 hours. After cooling the reaction mixture to 80°C, 1.45 g of 2-HEA, 1.6 g of isooctanol and 0.0374 g of p-methoxyphenol were added thereto and the resulting mixture was reacted at 85°C for 5 hours to thereby obtain a liquid urethane prepolymer. Using this liquid urethane prepolymer, a pressure-sensitive adhesive tape was obtained in the same manner as in Example 1. The adhesive tape thus obtained was also evaluated in the same manners as in Example 1. The results obtained are shown in the Table below.

### EXAMPLE 7

A liquid urethane prepolymer was obtained in the same manner as in Example 1 except for replacing the IPDI with 26.2 g of hydrogenated MDI. Using this liquid urethane prepolymer, a pressure-sensitive adhesive tape was obtained in the same manner as in Example 1. The adhesive tape thus obtained was also evaluated in the same manners as in Example 1. The results obtained are shown in the Table below.

### EXAMPLE 8

156.1 g of the same polyester polyol as obtained in Example 1, 21.9 g of IPDI, 0.0374 g of BHT and 0.02 g of DBTL were fed into a 1 liter four-necked flask equipped with a stirrer, a condenser and a thermometer, and the resulting mixture was reacted at 100°C for 4 hours. After cooling the reaction mixture to 80°C, 1.45 g of 2-HEA and 1.6 g of isooctanol were added thereto and the resulting mixture was reacted at 85°C for 5 hours. The reaction mixture was cooled to 50°C, and 1.1 g of isophoronediamine was added thereto to thereby extend the polymer chain. Thus, a liquid urethane prepolymer was obtained. Using this liquid urethane prepolymer, a pressure-sensitive adhesive tape was obtained in the same manner as in Example 1. The adhesive tape thus obtained was also evaluated in the same manners as in Example 1. The results obtained are shown in the Table below.

### EXAMPLE 9

A liquid urethane prepolymer was obtained in the same manner as in Example 6 except for replacing the isooctanol (1.6 g) by 3.9 g of 12-hydroxystearic acid and introducing a COOH group into the end. Using this liquid urethane prepolymer, a pressure-sensitive adhesive tape was obtained in the same manner as in Example 1. The adhesive tape thus obtained was evaluated in the same manners as in Example 1. The results obtained are shown in the Table below.

### EXAMLE 10

A liquid urethane prepolymer was obtained in the same manner as in Example 6 except for replacing the polyester polyol used in Example 6 with 136 g of other polyester polyol (hydroxyl value: 57.8, number average molecular weight: 1.9 x 10³) obtained by esterifying linear HOOC-(CH₂)₃₄-COOH (acid value: 196) with a highly pure hydrogenated dimer diol (hydroxyl value: 200 KOH mg/g). Using this liquid urethane prepolymer, a pressure-sensitive adhesive tape was obtained in the same manner as in Example 1. The adhesive tape thus obtained was also evaluated in the same manners as in Example 1. The results obtained are shown in the Table below.

### EXAMPLE 11

A liquid urethane prepolymer was obtained in the same manner as in Example 6 except for replacing the polyester polyol used in Example 6 with 137 g of other polyester polyol (hydroxyl value: 57.0, number average molecular weight: 10 x 10³) obtained by esterifying an unhydrogenated highly pure dimer acid (purity: 97% or above, acid value: 196) with a highly pure dimer diol (hydroxyl value: 200 KOH mg/g). Using this liquid urethane prepolymer, a pressure-sensitive adhesive tape was obtained in the same manner as in Example 1. The adhesive tape thus obtained was evaluated in the same manners as in Example 1. The results obtained are shown in the Table below.

### EXAMPLE 12

221 g of the same polyester polyol as obtained in Example 1, 24.5 g of IPDI, 0.05 g of BHT and 0.03 g of DBTL were fed into a 1 liter four-necked flask equipped with a stirrer, a condenser and a thermometer, and the resulting mixture was reacted at 100°C for 4 hours. After cooling the reaction mixture to 80°C, 3.2 g of isophoronediamine was added thereto and the resulting mixture was reacted for 1 hour. Further, 0.014 g of isooctanol was added thereto. After 1 hour, completion of the reaction was confirmed by the disappearance of the isocyanate group (2,280 cm⁻¹) to thereby obtain a liquid urethane prepolymer.

To 100 g of the urethane prepolymer thus obtained was added 1.0 g of hexamethylene diisocyanate trimer. The mixture thus obtained was applied onto a polyethylene terephthalate film at a coating build-up of 30 µm, and then crosslinked by heating to 100°C for 20 minutes to thereby obtain a pressure-sensitive adhesive tape. The adhesive tape thus obtained was then evaluated in the same manners as in Example 1. The results obtained are shown in the Table below.

### EXAMPLE 13

182.4 g of the same polyester polyol as obtained in Example 1, 22.2 g of IPDI, 0.0374 g of BHT and 0.02 g of DBTL were fed into a 1 liter four-necked flask equipped with a stirrer, a condenser and a thermometer, and the resulting mixture was reacted at 100°C for 4 hours. 7.8 g of 12-hydroxystearic acid was added to the reaction mixture at the same temperature and the resulting mixture was reacted for additional 4 hours to thereby obtain a liquid urethane prepolymer.

To 100 g of the urethane prepolymer thus obtained were added 1.5 g of bisphenol A-diglycidyl ether and 0.3 g of dimethylbenzylamine. After thoroughly mixing, the mixture thus obtained was applied onto a polyethylene terephthalate film at a coating build-up of 30 µm and then crosslinked by heating to 120°C for 20 minutes to thereby obtain a pressure-sensitive adhesive tape. The adhesive tape thus obtained was then evaluated in the same manners as in Example 1. The results obtained are shown in the Table below.

### EXAMPLE 14

182.4 g of the same polyester polyol as obtained in Example 1, 22.2 g of IPDI, 0.0374 g of BHT and 0.02 g of DBTL were fed into a 1 liter four-necked flask equipped with a stirrer, a condenser and a thermometer, and the resulting mixture was reacted at 100°C for 4 hours. After cooling to 80°C, 1.45 g of 4-hydroxybutyl vinyl ether and 1.6 g of isooctanol were added thereto and the resulting mixture was reacted for additional 5 hours to thereby obtain a liquid urethane prepolymer.

To 100 g of the urethane prepolymer thus obtained were added as a crosslinking agent 3.0 g of BF₃ salt of p-hydroxyphenyl benzylmethylsulfonium. After thoroughly mixing, the mixture thus obtained was crosslinked in the same manner as in Example 1 to thereby obtain a pressure-sensitive adhesive tape. The adhesive tape thus obtained was then evaluated in the same manners as in Example 1. The results obtained are shown in the Table below.

### COMPARATIVE EXAMPLE

A liquid urethane prepolymer was obtained in the same manner as in Example 1 except for replacing the polyester polyol used in Example 1 with 150 g of terminal hydroxyl-modified polybutadiene (hydroxyl value: 56.1) and using 22.2 g of IPDI. Using this liquid urethane prepolymer, a pressure-sensitive adhesive tape was obtained in the same manner as in Example 1. The adhesive tape thus obtained was then evaluated in the same manners as in Example 1. The results obtained are shown in the Table below.

**TABLE**

| Ex. No. | Number average molecular weight (g/mol) | Glass transition temperature (°C) | Adhesive strength (g/25 mm) | Holding power (min. 40°C) | Ball No. |
|---|---|---|---|---|---|
| 1 | 0.9 x 10⁴ | -43.7 | 915 | >1,000 | 10 |
| 2 | 1.0 x 10⁴ | -43.0 | 1,000 | >1,000 | 10 |
| 3 | 1.8 x 10⁴ | -45.7 | 450 | >1,000 | 10 |
| 4 | 1.4 x 10⁴ | -42.6 | 120 | >1,000 | 6 |
| 5 | 1.9 x 10⁴ | -43.4 | 1,000 | >1,000 | 13 |
| 6 | 1.5 x 10⁴ | -45.4 | 2,350 | >1,000 | 13 |
| 7 | 1.6 x 10⁴ | -42.1 | 1,440 | >1,000 | 13 |
| 8 | 1.2 x 10⁴ | -40.0 | 800 | >1,000 | 8 |
| 9 | 1.8 x 10⁴ | -41.0 | 2,500 | >1,000 | 10 |
| 10 | 1.0 x 10⁴ | -46.5 | 1,000 | >1,000 | 10 |
| 11 | 1.3 x 10⁴ | -47.5 | 980 | >1,000 | 10 |
| 12 | 1.8 x 10⁴ | -45.5 | 1,420 | >1,000 | 11 |
| 13 | 2.0 x 10⁴ | -44.3 | 1,200 | >1,000 | 12 |
| 14 | 1.5 x 10⁴ | -47.2 | 1,850 | >1,000 | 10 |
| Comparative Example | 0.9 x 10⁴ | -53.0 | 70 | Weak, measurement impossible | 5 |

The pressure-sensitive adhesive layers each show a glass transition temperature lower than about -40°C, which indicates that the pressure-sensitive adhesive layer does not become brittle even in a considerably low temperature region. The pressure-sensitive adhesives of Examples 1 to 14 of the present invention each show an adhesive strength and holding power sufficiently durable to practical use, and a high ball No., showing a sufficient tackiness. On the other hand, the pressure-sensitive adhesive layer of the Comparative Example shows very low adhesive strength which is not practically used, very weak, measurement-impossible holding power, and very small ball No.

Because of being in the form of a liquid, the urethane prepolymers of the present invention can be applied onto substrates or subjects as it is, and does not require any solvent for coating. Therefore, no solvent scatters during the application step and no apparatus is needed for recovering the solvent. Such urethane prepolymers can be crosslinked in the state of being applied, to increase its molecular weight, thereby exhibiting pressure-sensitive adhesive properties, making it possible to use the same as pressure-sensitive adhesives. Further, those pressure-sensitive adhesives have well-balanced adhesive strength and holding power, and can maintain sufficient pressure-sensitive adhesive properties even in a low temperature region.

While the invention has been described in detail and with reference to specific embodiments thereof, it will be apparent to one skilled in the art that various changes and modifications can be made therein without departing from the spirit and scope thereof.

## Claims

1. An urethane prepolymer represented by the following formula [I]:
d-c-(a-c)ₖ-e [I]
wherein k is from 4 to 100; a represents a polyester group having a number average molecular weight of 1 x 10³ to 5 x 10³; c represents an organic isocyanate group; d represents a monool having at least one functional group selected from the group consisting of hydroxyl group, carboxyl group, (meth)acryloyl group and vinyl group; and e is a monool, which is the same as or different from d, having a number average molecular weight of 5 x 10³ to 5 x 10⁵.

2. An urethane prepolymer represented by the following formula [II]:
d-c-(a-c)ₙ-(b-c)ₘ-(a-c)ₗ-e [II]
wherein n and l each are from 2 to 50; m is from 1 to 50; a represents a polyester group having a number average molecular weight of 1 x 10³ to 5 x 10³; b represents at least one divalent group selected from the group consisting of dimaines and diols; c represents an organic isocyanate group; d represents a monool having at least one functional group selected from the group consisting of hydroxyl group, carboxyl group, (meth)acryloyl group and vinyl group; and e is a monool, which is the same as or different from d, having a number average molecular weight of 5 x 10³ to 5 x 10⁵.

3. An urethane prepolymer as claimed in claim 1 or 2, wherein said polyester group having a number average molecular weight of 1 x 10³ to 5 x 10³ is at least one member selected from the group consisting of groups represented by the following formulae:
-[OC₃₄H₆₆COORO]ⱼ-
and
-[OC₃₄H₆₈COORO]ⱼ-
wherein R represents an alkylene group having 2 to 36 carbon atoms; and j is an integer determined on the basis of said number average molecular weight.

4. An urethane prepolymer as claimed in claim 1 or 2, wherein said organic isocyanate group c is at least one member selected from the group consisting of isophorone diisocyanate group, hexamethylene diisocyanate group, norbornane diisocyanate group, tolylene diisocyanate group, xylylene diisocyanate group, trimethylhexamethylene diisocyanate group, hydrogenated xylylene diisocyanate group, hydrogenated diphenylmethane diisocyanate group and diphenylmethane diisocyanate group.

5. An urethane prepolymer as claimed in claim 1 or 2, wherein said monool d is at least member one selected from the group consisting of hydroxyalkyl (meth)acrylates, hydroxyalkyl vinyl ethers, carboxyl group-containing monoalcohols, lauryl alcohol and isooctanol.

6. An urethane prepolymer as claimed in claim 1 or 2, wherein said monool e is at least one member selected from the group consisting of hydroxyalkyl (meth)acrylates, hydroxyalkyl vinyl ethers, carboxyl group-containing monoalcohols, lauryl alcohol, isooctanol, linear alkyl alcohols represented by the formula C_{q}H_{2q+1}OH (wherein q is from 1 to 18), isoalkyl alcohols, secondary alkyl alcohols, tertiary alkyl alcohols and hydroxyl group-containing phenylketones.

7. An urethane prepolymer as claimed in claim 2, wherein said diamine b is at least one member selected from the group consisting of diaminopropane, diaminobutane, nonanediamine, isophoronediamine, hexamethylenediamine, hydrogenated diphenylmethanediamine, bisaminopropyl ether, bisaminopropylethane, bisaminopropyl diethylene glycol ether, bisaminopropyl polyethyleneglycol ether, bisaminopropoxyneopentyl glycol, diphenylmethanediamine, xylylenediamine, toluenediamine and both end-amino-modified silicone, and said diol b is at least one member selected from the group consisting of ethylene glycol, polyethylene glycol, propylene glycol, polypropylene glycol, butylene glycol, polytetramethylene glycol, pentanediol, hexanediol, both end-hydroxyl-modified silicone and carboxyl group-containing diols.

8. A process for producing an urethane prepolymer represented by the following formula [I]:
d-c-(a-c)ₖ-e [I]
wherein k is from 4 to 100; a represents a polyester group; c represents an organic isocyanate group; d represents a monool having at least one functional group selected from the group consisting of hydroxyl group, carboxyl group, (meth)acryloyl group and vinyl group; and e represents a monool which is the same as or different from the monool d,
which comprises forming a polymer comprising a repeating unit formed by polyaddition reaction of the polyester group a to the organic isocyanate group c and having organic isocyanate groups c at both ends; and adding the monool d having at least one functional group selected from the group consisting of hydroxyl group, carboxyl group, (meth)acryloyl group and vinyl group to the organic isocyanate group at one end of said polymer, and the monool e, which is the same as or different from said monool d, to the organic isocyanate group at another end of said polymer.

9. A process for producing an urethane prepolymer represented by the following formula [II]:
d-c-(a-c)ₙ-(b-c)ₘ-(a-c)ₗ-e [II]
wherein n and l each are from 2 to 50; and m is from 1 to 50; a represents a polyester group; b represents at least one group sselected from the group consisting of diamines and diols; c represents an organic isocyanate group; d represents a monool having at least one functional group selected from the group consisting of hydroxyl group, carboxyl group, (meth)acryloyl group and vinyl group; and e represents a monool which is the same as or different from the monool d,
which comprises adding repeating units formed by polyaddition reaction of the polyester group a to the organic isocyanate group c, to both ends of another repeating unit formed by polyaddition reaction of the organic isocyanate group c to the group b of at least one member selected from the group consisting of diamines and diols to thereby form a polymer having the organic isocyanate groups c at both ends; and adding the monool d having at least one functional group selected from the group consisting of hydroxyl group, carboxyl group, (meth)acryloyl group and vinyl group to the organic isocyanate group at one end of said polymer, and the monool e, which is the same as or different from said monool d, to the organic isocyanate group at another end of said polymer.

10. A process for producing an urethane prepolymer as claimed in claim 8 or 9, wherein said polyester group is at least one member selected from the group consisting of groups represented by the following formulae:
-[OC₃₄H₆₆COORO]ⱼ-
and
-[OC₃₄H₆₈COORO]ⱼ-
wherein R represents an alkylene group having 2 to 36 carbon atoms; and j is an integer determined on the basis of said number average molecular weight.

11. A process for producing an urethane prepolymer as claimed in claim 8 or 9, wherein said organic isocyanate group c is at least one member selected from the group consisting of isophorone diisocyanate group, hexamethylene diisocyanate group, norbornane diisocyanate group, tolylene diisocyanate group, xylylene diisocyanate group, trimethylhexamethylene diisocyanate group, hydrogenated xylylene diisocyanate group, hydrogenated diphenylmethane diisocyanate group and diphenylmethane diisocyanate group.

12. A process for producing an urethane prepolymer as claimed in claim 8 or 9, wherein said monool d is at least one member selected from the group consisting of hydroxyalkyl (meth)acrylates, hydroxyalkyl vinyl ethers, carboxyl group-containing monoalcohols, lauryl alcohol and isooctanol.

13. A process for producing an urethane prepolymer as claimed in claim 8 or 9, wherein said monool e is at least one member selected from the group consisting of hydroxyalkyl (meth)acrylates, hydroxyalkyl vinyl ethers, carboxyl group-containing monoalcohols, lauryl alcohol, isooctanol, linear alkyl alcohols represented by the formula C_{q}H_{2q+1}OH (wherein q is from 1 to 18), isoalkyl alcohols, secondary alkyl alcohols, tertiary alkyl alcohols and hydroxylated phenylketones.

14. A process for producing an urethane prepolymer as claimed in claim 9, wherein said diamine b is at least one member selected from the group consisting of diaminopropane, diaminobutane, nonanediamine, isophoronediamine, hexamethylenediamine, hydrogenated diphenylmethanediamine, bisaminopropyl ether, bisaminopropylethane, bisaminopropyl diethylene glycol ether, bisaminopropyl polyethyleneglycol ether, bisaminopropoxyneopentyl glycol, diphenylmethanediamine, xylylenediamine, toluenediamine and both end-amino-modified silicone, and said diol b is at least one member selected from the group consisting of ethylene glycol, polyethylene glycol, propylene glycol, polypropylene glycol, butylene glycol, polytetramethylene glycol, pentanediol, hexanediol, both end-hydroxyl-modified silicone and carboxyl group-containing diols.

15. A pressure-sensitive adhesive comprising as a main component a polymer prepared by crosslinking the urethane prepolymer as claimed in claim 1 to increase its molecular weight.

16. A pressure-sensitive adhesive as claimed in claim 15, wherein said crosslinking of the prepolymer is performed in the presence of at least one member selected from the group consisting of crosslinking agents, polymerization initiators and active energy.

17. A pressure-sensitive adhesive as claimed in claim 16, wherein said active energy is at least one selected from the group consisting of ultraviolet rays, visible rays and heat.

18. A pressure-sensitive adhesive as claimed in claim 16, wherein at least one of the monools d and e in said urethane prepolymer is a hydroxyalkyl (meth)acrylate, and said polymerization initiator is at least one photoradical polymerization initiator selected from the group consisting of hydroxycyclohexylphenyl ketone, 1-phenyl-2-hydroxy-2-methylpropan-1-one, 2,2-dimethoxy-2-phenylacetophenone, benzophenone, 2-methyl[4-(methylthio)phenyl]-2-morpholino-1-propanone, 2-hydroxy-2-methyl-1-phenylpropan-1-one, 1-(4-isopropylphenyl)-2-hydroxy-2-methylpropan-1-one, 4-(2-hydroxyethoxy)phenyl-(2-hydroxy-2-propyl)ketone, 4-(2-acryloyloxyethoxy)phenyl-(2-hydroxy-2-propyl)ketone, 4-(2-methacryloyloxyethoxy)phenyl-(2-hydroxy-2-propyl)ketone and 2,4,6-trimethylbenzoyldiphenylphosphine oxide, or at least one heat polymerization initiator selected from the group consisting of dilauroyl peroxide, dibutyl peroxide, dicumyl peroxide, t-butylcumyl peroxide, α,α-bis(t-butylperoxy-m-isopropyl)benzoate and 2,5-dimethyl-2,5-di(t-butylperoxy)-hexane.

19. A pressure-sensitive adhesive as claimed in claim 16, wherein at least one of said monools d and e in said urethane prepolymer is a hydroxyalkyl vinyl ether, and said polymerization initiator is at least one radiation induced cationic polymerization initiator selected from the group consisting of aromatic sulfonium salts, p-hydroxyphenyl benzylmethylsulfonium salt and p-methoxycarbonyloxyphenyl dimethylsulfonium salt.

20. A pressure-sensitive adhesive as claimed in claim 16, wherein at least one of said monools d and e in said urethane prepolymer is a carboxyl group-containing monoalcohol or said b is a carboxylated diol, and said crosslinking agent is at least one epoxy compound selected from the group consisting of bisphenol A-diglycidyl ether, hydrogenated bisphenol A-diglycidyl ether, bisphenol F-diglycidyl ether, hydrogenated bisphenol F-diglycidyl ether, bisphenol S-diglycidyl ether, hydrogenated bisphenol S-diglycidyl ether, phthalic acid-diglycidyl ether, hydrogenated phthalic acid-diglycidyl ether, ethylene glycol-diglycidyl ether, diethylene glycol-diglycidyl ether, triethylene glycol-diglycidyl ether, tetraethylene glycol-diglycidyl ether, polyethylene glycol-diglycidyl ether, propylene glycol-diglycidyl ether, dipropylene glycol-diglycidyl ether, tripropylene glycol-diglycidyl ether, polypropylene glycol-diglycidyl ether, butanediol diglycidyl ether, polytetraethylene glcyol #250-diglycidyl ether, hexanediol diglycidyl ether, nonanediol diglycidyl ether, phenol novolak epoxide and cresol novolak epoxide.

21. A pressure-sensitive adhesive as claimed in claim 16, wherein said b in said urethane prepolymer is a diamine, and said crosslinking agent is polyisocyanate.

## Patentansprüche

1. Urethanpräpolymer, dargestellt durch die folgende Formel (I):
d-c-(a-c)ₖ-e (I)
wobei
k von 4 bis 100 ist; a eine Polyestergruppe darstellt, mit einem Zahlenmittel des Molekulargewichts von 1 x 10³, bis 5 x 10³; c eine organische Isocyanatgruppe darstellt; d einen Monool darstellt, mit mindestens einer funktionellen Gruppe, ausgewählt aus der Gruppe bestehend aus Hydroxylgruppe, Carboxylgruppe, (Meth)Acryloylgruppe und Vinylgruppe; und e einen Monool darstellt, gleich oder verschieden von d, mit einem Zahlenmittel des Molekulargewichts von 5 x 10³ bis 5 x 10⁵.

2. Urethanpräpolymer, dargestellt durch die folgende Formel (II):
d-c-(a-c)ₙ-(b-c)ₘ-(a-c)ₗ-e (II)
wobei
n und l jeweils von 2 bis 50 sind; m von 1 bis 50 ist; a eine Polyestergruppe darstellt, mit einem Zahlenmittel des Molekulargewichts von 1 x 10³ bis 5 x 10³; b mindestens eine divalente Gruppe darstellt, ausgewählt aus der Gruppe bestehend aus Diaminen und Diolen; c eine organische Isocyanatgruppe darstellt; d einen Monool darstellt, mit mindestens einer funktionellen Gruppe, ausgewählt aus der Gruppe bestehend aus Hydroxylgruppe, Carboxylgruppe, (Meth)Acryloylgruppe und Vinylgruppe; und e einen Monool darstellt, gleich oder verschieden von d, mit einem Zahlenmittel des Molekulargewichts von 5 x 10³ bis 5 x 10⁵.

3. Urethanpräpolymer nach Anspruch 1 oder 2, wobei besagte Polyestergruppe mit einem Zahlenmittel des Molekulargewichts von 1 x 10³ bis 5 x 10³ mindestens ein Element ist, ausgewählt aus der Gruppe, bestehend aus Gruppen, dargestellt durch die folgenden Formeln:
- [OC₃₄H₆₆COORO]ⱼ-
und
- [OC₃₄H₆₈COORO]ⱼ-
wobei
R eine Alkylengruppe mit 2 bis 36 Kohlenstoffatomen darstellt; und j eine ganze Zahl ist, bestimmt auf der Basis des besagten Zahlenmittels des Molekulargewichts.

4. Urethanpräpolymer nach Anspruch 1 oder 2, wobei besagte organische Isocyanatgruppe c mindestens ein Element ist, ausgewählt aus der Gruppe bestehend aus Isophorondiisocyanatgruppe, Hexamethylendiisicyanatgruppe, Norbomandiisicyanatgruppe, Xylylendiisicyanatgruppe, Trimethylhexamethylendiisicyanatgruppe, hydrierte Xylylendiisicyanatgruppe, hydrierte Diphenylmethandiisicyanatgruppe, und Diphenylmethandiisicyanatgruppe.

5. Urethanpräpolymer nach Anspruch 1 oder 2, wobei besagter Monool d mindestens ein Element ist, ausgewählt aus der Gruppe bestehend aus Hydroxyalkyl(meth)acrylaten, Hydroxyalkylvinylethern, Carboxygruppen enthaltenen Monoalkoholen, Laurylalkohol und Isooctanol.

6. Urethanpräpolymer nach Anspruch 1 oder 2, wobei besagter Monool e mindestens ein Element ist, ausgewählt aus der Gruppe bestehend aus Hydroxyalkyl(meth)acrylaten, Hydroxyalkylvinylethem, Carboxygruppen enthaltenen Monoalkoholen, Laurylalkohol, Isooctanol, linearen Alkylalkoholen, dargestellt durch die Formel C_{q}H_{2q+1}OH (wobei q von 1 bis 18 ist), Isoalkylalkoholen, sekundären Alkylalkoholen, tertiären Alkylalkoholen und Hydroxylgruppen enthaltenen Phenylketonen.

7. Urethanpräpolymer nach Anspruch 2, wobei besagtes Diamin b mindestens eins ist, ausgewählt aus der Gruppe bestehend aus Diaminopropan, Diaminobutan, Nonandiamin, Isophorondiamin, Hexamethylendiamin, hydriertes Diphenylmethandiamin, Bisaminopropylether, Bisaminopropylethan, Bisaminopropyldiethylenglycolether, Bisaminopropylpolyethylenglycolether, Bisaminopropoxyneopentylglycol, Diphenylmethandiamin, Xylylendiamin, Toluendiamin und an beiden Enden aminomodifiziertes Silicon, und wobei besagter Diol b mindestens einer ist, ausgewählt aus der Gruppe bestehend aus Ethylenglycol, Polyethylenglycol, Propylenglycol, Polypropylenglycol, Butylenglycol, Polytetramethylenglycol, Pentandiol, Hexandiol, an beiden Enden hydroxylmodifiziertes Silicon und Carboxylgruppen enthaltenen Diolen.

8. Verfahren zur Herstellung eines Urethanpräpolymers, dargestellt durch die folgende Formel (I):
d-c-(a-c)ₖ-e (I)
wobei
k von 4 bis 100 ist; a eine Polyestergruppe darstellt, c eine organische Isocyanatgruppe darstellt; d einen Monool darstellt, mit mindestens einer funktionellen Gruppe, ausgewählt aus der Gruppe bestehend aus Hydroxylgruppe, Carboxylgruppe, (Meth)Acryloylgruppe und Vinylgruppe; und e einen Monool darstellt, gleich oder verschieden von d, umfassend
die Formung eines Polymers, umfassend eine Wiederholungseinheit, geformt durch eine Polyadditionsreaktion der Polyestergruppe a und der organischen Isocyanatgruppe c, wobei dieses Polymer an beiden Enden eine organische Isocyanatgruppe c aufweist; Zugeben des Monools d, mit mindestens einer funktionellen Gruppe, ausgewählt aus der Gruppe bestehend aus Hydroxylgruppe, Carboxylgruppe, (Meth)Acryloylgruppe und Vinylgruppe, zu der organischen Isocyanatgruppe an einem Ende, und Zugabe des Monools e, der gleich oder verschieden vom Monool d ist, zur organischen Isocyanatgruppe am anderen Ende besagten Polymers.

9. Verfahren zur Herstellung eines Urethanpräpolymers, dargestellt durch die folgende Formel (II):
d-c-(a-c)ₙ-(b-c)ₘ-(a-c)ₗ-e (II)
wobei
n und l jeweils von 2 bis 50 sind; m von 1 bis 50 ist; a eine Polyestergruppe darstellt; b mindestens eine Gruppe darstellt, ausgewählt aus der Gruppe bestehend aus Diaminen und Diolen; c eine organische Isocyanatgruppe darstellt; d einen Monool darstellt, mit mindestens einer funktionellen Gruppe, ausgewählt aus der Gruppe bestehend aus Hydroxylgruppe, Carboxylgruppe, (Meth)Acryloylgruppe und Vinylgruppe; und e einen Monool darstellt, gleich oder verschieden von d, umfassend
Zugeben von Wiederholungseinheiten, geformt durch eine Polyadditionsreaktion der Polyestergruppe a und der organischen Isocyanatgruppe c, an beide Enden weiterer Wiederholungseinheiten, geformt durch eine Polyadditionsreaktion der organischen Isocyanatgruppe c mit der Gruppe b, ausgewählt aus der Gruppe bestehend aus Diolen und Diaminen, wodurch ein Polymer geformt wird, mit der organischen Isocyanatgruppe can beiden Enden, und Zugabe des Monools d, mit mindestens einer funktionellen Gruppe, ausgewählt aus der Gruppe bestehend aus Hydroxylgruppe, Carboxylgruppe, (Meth)Acryloylgruppe und Vinylgruppe, zu der organischen Isocyanatgruppe an einem Ende, und Zugabe des Monools e, der gleich oder verschieden vom Monool d ist, zur organischen Isocyanatgruppe am anderen Ende besagten Polymers.

10. Verfahren zur Herstellung eines Urethanpräpolymers nach Anspruch 8 oder 9, wobei besagte Polyestergruppe mindestens ein Element ist, ausgewählt aus der Gruppe, bestehend aus Gruppen, dargestellt durch die folgenden Formeln:
- [OC₃₄H₆₆COORO]ⱼ-
und
- [OC₃₄H₆₈COORO]ⱼ-
wobei
R eine Alkylengruppe mit 2 bis 36 Kohlenstoffatomen darstellt; und j eine ganze Zahl ist, bestimmt auf der Basis des besagten Zahlenmittels des Molekulargewichts.

11. Verfahren zur Herstellung eines Urethanpräpolymers nach Anspruch 8 oder 9, wobei besagte organische Isocyanatgruppe c mindestens ein Element ist, ausgewählt aus der Gruppe bestehend aus Isophorondiisocyanatgruppe, Hexamethylendiisicyanatgruppe, Norbomandiisicyanatgruppe, Xylylendiisicyanatgruppe, Trimethylhexamethylendiisicyanatgruppe, hydrierte Xylylendiisicyanatgruppe, hydrierte Diphenylmethandiisicyanatgruppe, und Diphenylmethandiisicyanatgruppe.

12. Verfahren zur Herstellung eines Urethanpräpolymers nach Anspruch 8 oder 9, wobei besagter Monool d mindestens ein Element ist, ausgewählt aus der Gruppe bestehend aus Hydroxyalkyl(meth)acrylaten, Hydroxyalkylvinylethem, Carboxygruppen enthaltenen Monoalkoholen, Laurylalkohol und Isooctanol.

13. Verfahren zur Herstellung eines Urethanpräpolymers nach Anspruch 8 oder 9, wobei besagter Monool e mindestens ein Element ist, ausgewählt aus der Gruppe bestehend aus Hydroxyalkyl(meth)acrylaten, Hydroxyalkylvinylethem, Carboxygruppen enthaltenen Monoalkoholen, Laurylalkohol, Isooctanol, linearen Alkoholen, dargestellt durch die Formel C_{q}H_{2q+1}OH (wobei q von 1 bis 18 ist), Isoalkylalkoholen, sekundären Alkylalkoholen, tertiären Alkylalkoholen und Hydroxylgruppen enthaltenen Phenylketonen.

14. Verfahren zur Herstellung eines Urethanpräpolymers nach Anspruch 9, wobei besagtes Diamin b mindestens eins ist, ausgewählt aus der Gruppe bestehend aus Diaminopropan, Diaminobutan, Nonandiamin, Isophorondiamin, Hexamethylendiamin, hydriertes Diphenylmethandiamin, Bisaminopropylether, Bisaminopropylethan, Bisaminopropyldiethylenglycolether, Bisaminopropylpolyethylenglycolether, Bisaminopropoxyneopentylglycol, Diphenylmethandiamin, Xylylendiamin, Toluendiamin und an beiden Enden aminomodifiziertes Silicon, und wobei besagter Diol b mindestens einer ist, ausgewählt aus der Gruppe bestehend aus Ethylenglycol, Polyethylenglycol, Propylenglycol, Polypropylenglycol, Butylenglycol, Polytetramethylenglycol, Pentandiol, Hexandiol, an beiden Enden hydroxylmodifiziertes Silicon und Carboxylgruppen enthaltenen Diolen.

15. Druckempfindliches Adhesiv, umfassend als Hauptkomponente ein Polymer, hergestellt durch Vernetzung, zur Erhöhung des Molekulargewichts, des in Anspruch 1 beanspruchten Urethanpräpolymers.

16. Druckempfindliches Adhesiv nach Anspruch 15, wobei besagte Vernetzung des Präpolymers in der Gegenwart mindestens eines Elements, ausgewählt aus der Gruppe bestehend aus Vernetzungsmitteln, Polymerisationsinitiatoren und aktiver Energie, durchgeführt wird.

17. Druckempfindliches Adhesiv nach Anspruch 16, wobei besagte aktive Energie ausgewählt ist aus der Gruppe bestehend aus UV-Strahlen, sichtbaren Strahlen und Wärme.

18. Druckempfindliches Adhesiv nach Anspruch 16, wobei mindestens einer der Monoole d und e in besagtem Urethanpräpolymer ein Hydroxyalkyl(meth)acrylat ist und besagter Polymerisationsinitiator mindestens ein Photoradikalpolymerisationsinitiator ist, ausgewählt aus der Gruppe bestehend aus Hydroxycyclohexylphenolketon, 1-Phenyl-2-hydroxy-2-methylpropan-1-on, 2,2-Dimethoxy-2-phenylacetophenon, Benzophenon, 2-Methyl[4-(metylthio)phenyl]-2-morphotino-1-propanon, 2-Hydroxy-2-methyl-1-phenylpropan-1-on, 1-(4-Isopropylphenyl)-2-hydroxy-2-methylpropan-1-on, 4-(2-Hydroxyethoxy)phenyl-(2-hydroxy-2-propyl)keton, 4-(2-Acryloyloxyethoxy)phenyl-(2-hydroxy-2-propyl)keton, 4-(2-Methacryloyloxyethoxy)phenyl-(2-hydroxy-2-propyl)keton und 2,4,6-Trimethylbenzoyldiphenylphosphinoxid, oder mindestens ein Wärmepolymerisationsinitiator ist, ausgewählt aus der Gruppe bestehend aus Dilauroylperoxid, Dibutylperoxid, Dicumylperoxid, t-Butylcumylperoxid, alpha,alpha-Bis-(t-butylperoxy-m-isopropyl)benzoat und 2,5-Dimethyl-2,5-di(t-butylperoxy)hexan.

19. Druckempfindliches Adhesiv nach Anspruch 16, wobei mindestens einer der Monoole d und e in besagtem Urethanpräpolymer ein Hydroxyalkylvinylether ist und besagter Polymerisationsinitiator mindestens ein strahlungsinduzierter kationischer Polymerisationsinitiator ist, ausgewählt aus der Gruppe bestehend aus aromatischen Sulfoniumsalzen, p-Hydroxyphenylbenzylmethylsulfoniumsalzen und p-methoxycarbonyloxyphenyldimethylsulfoniumsalzen.

20. Druckempfindliches Adhesiv nach Anspruch 16, wobei mindestens einer der Monoole d und e in besagtem Urethanpräpolymer ein Carboxylgruppen enthaltener Monoalkohol oder b ein carboxylierter Diol ist und wobei besagtes Vernetzungsmittel mindestens eine Epoxyverbindung ist, ausgewählt aus der Gruppe bestehend aus Bisphenol-A-diglycidylether, hydrierter Bisphenol-A-diglycidylether, Bisphenol-F-diglycidylether, hydrierter Bisphenol-F-diglycidylether, Bisphenol-S-diglycidylether, hydrierter Bisphenol-S-diglycidylether, Phthalsäurediglycidylether, hydrierter Phthalsäurediglycidylether, Ethylenglycoldiglycidylether, Diethylenglycoldiglycidylether, Triethylenglycoldiglycidylether, Tetraethylenglycoldiglycidylether, Polyethylenglycoldiglycidylether, Propylenglycoldiglycidylether, Dipropylenglycoldiglycidylether, Tripropylenglycoldiglycidylether, Polypropylenglycoldiglycidylether, Butandiodiglycidylether, Polytetraethylenglycol-#250-diglycidylether, Hexandioldiglycidylether, Nonandioldiglycidylether, Phenolnovolakepoxid und Cresonovolakepoxid.

21. Druckempfindliches Adhesiv nach Anspruch 16, wobei besagtes b in besagtem Urethanpräpolymer ein Diamin und besagtes Vernetzungsmittel ein Polyisocyanat ist.

## Revendications

1. Prépolymère d'uréthane représenté par la formule (I) suivante :
d-c-(a-c)ₖ-e (I)
où k est de 4 à 100 ; a représente un groupe polyester ayant un poids moléculaire moyen en nombre de 1 x 10³ à 5 x 10³; c représente un groupe isocyanate organique ; d représente un monool ayant au moins un groupe fonctionnel sélectionné parmi le groupe constitué du groupe hydroxyle, du groupe carboxyle, du groupe (méth)acryloyle et du groupe vinyle ; et e est un monool, qui est identique ou différent de d, présentant un poids moléculaire moyen en nombre de 5 x 10³ à 5 x 10⁵.

2. Prépolymère d'uréthane représenté par la formule (II) suivante :
d-c-(a-c)ₙ-(b-c)ₘ-(a-c)ₗ-e (II)
où n et l sont chacun de 2 à 50 ; m est de 1 à 50 ; a représente un groupe polyester ayant un poids moléculaire moyen en nombre de 1 x 10³ à 5 x 10³; b représente au moins un groupe divalent sélectionné parmi le groupe constitué des diamines et des diols ; c représente un groupe isocyanate organique ; d représente un monool ayant au moins un groupe fonctionnel sélectionné parmi le groupe constitué du groupe hydroxyle, du groupe carboxyle, du groupe (méth)acryloyle et du groupe vinyle ; et e est un monool, qui est identique ou différent de d, présentant un poids moléculaire moyen en nombre de 5 x 10³ à 5 x 10⁵.

3. Prépolymère d'uréthane selon la revendication 1 ou 2, dans lequel ledit groupe polyester ayant un poids moléculaire moyen en nombre de 1 x 10³ à 5 x 10³ est au moins un membre sélectionné parmi le groupe constitué de groupes représentés par les formules suivantes :
-[OC₃₄H₆₆COORO]ⱼ-
et
-[OC₃₄H₆₈COORO]ⱼ-
dans lesquelles R représente un groupe alkylène ayant de 2 à 36 atomes de carbone ; et j est un entier déterminé sur la base dudit poids moléculaire moyen en nombre.

4. Prépolymère d'uréthane selon la revendication 1 ou 2, dans lequel ledit groupe isocyanate organique c est au moins un membre sélectionné parmi le groupe constitué du groupe diisocyanate d'isophorone, du groupe diisocyanate d'hexaméthylène, du groupe diisocyanate de norbornane, du groupe diisocyanate de tolylène, du groupe diisocyanate de xylylène, du groupe diisocyanate de triméthylhexaméthylène, du groupe diisocyanate de xylylène hydrogéné, du groupe diisocyanate de diphénylméthane hydrogéné et du groupe diisocyanate de diphénylméthane.

5. Prépolymère d'uréthane selon la revendication 1 ou 2, dans lequel ledit monool d est au moins un membre sélectionné parmi le groupe constitué des (méth)acrylates d'hydroxyalkyle, des éthers vinyliques d'hydroxyalkyle, des monoalcools contenant des groupes carboxyle, de l'alcool laurique et de l'isooctanol.

6. Prépolymère d'uréthane selon la revendication 1 ou 2, dans lequel ledit monool e est au moins un membre sélectionné parmi le groupe constitué des (méth)acrylates d'hydroxyalkyle, des éthers vinyliques d'hydroxyalkyle, des monoalcools contenant des groupes carboxyle, de l'alcool laurique, de l'isooctanol, des alcools d'alkyles linéaires représentés par la formule C_{q}H_{2q+1}OH (dans laquelle q est de 1 à 18), des alcools d'isoalkyles, des alcools d'alkyles secondaires, des alcools d'alkyles tertiaires et des phénylcétones contenant des groupes hydroxyle.

7. Prépolymère d'uréthane selon la revendication 1 ou 2, dans lequel ladite diamine b est au moins un membre sélectionné parmi le groupe constitué du diaminopropane, du diaminobutane, de la nonanediamine, de l'isophoronediamine, de l'hexaméthylènediamine, de la diphénylméthanediamine hydrogénée, de l'éther de bisaminopropyle, du bisaminopropyléthane, de l'éther de diéthylène glycol bisaminopropylique, de l'éther de polyéthylèneglycol bisaminopropylique, du bisaminopropoxynéopentyle glycol, de la diphénylméthanediamine, de la xylylènediamine, de la toluènediamine et de la silicone modifiée aux deux extrémités par un groupe amino, et ledit diol b est au moins un membre sélectionné parmi le groupe constitué de l'éthylène glycol, du polyéthylène glycol, du propylène glycol, du polypropylène glycol, du butylène glycol, du polytétraméthylène glycol, du pentanediol, de l'hexanediol, de la silicone modifiée aux deux extrémités par un groupe hydroxyle et des diols contenant des groupes carboxyle.

8. Processus de production d'un prépolymère d'uréthane représenté par la formule (I) suivante :
d-c-(a-c)ₖ-e (I)
où k est de 4 à 100 ; a représente un groupe polyester ; c représente un groupe isocyanate organique ; d représente un monool ayant au moins un groupe fonctionnel sélectionné parmi le groupe constitué du groupe hydroxyle, du groupe carboxyle, du groupe (méth)acryloyle et du groupe vinyle ; et e représente un monool, qui est identique ou différent de d, qui comprend la formation d'un polymère comprenant une unité répétée formée par la réaction de polyaddition du groupe polyester a au groupe isocyanate organique c et ayant des groupes isocyanate organiques c aux deux extrémités ; et l'addition du monool d ayant au moins un groupe fonctionnel sélectionné parmi le groupe constitué du groupe hydroxyle, du groupe carboxyle, du groupe (méth)acryloyle et du groupe vinyle au groupe isocyanate organique à une extrémité dudit polymère et du monool e, qui est identique ou différent dudit monool d, au groupe isocyanate organique à une autre extrémité dudit polymère.

9. Processus de production d'un prépolymère d'uréthane représenté par la formule (II) suivante :
d-c-(a-c)ₙ-(b-c)ₘ-(a-c)ₗ-e (II)
où n et l sont chacun de 2 à 50 ; et m est de 1 à 50 ; a représente un groupe polyester ; b représente au moins un groupe sélectionné parmi le groupe constitué des diamines et des diols ; c représente un groupe isocyanate organique ; d représente un monool ayant au moins un groupe fonctionnel sélectionné parmi le groupe constitué du groupe hydroxyle, du groupe carboxyle, du groupe (méth)acryloyle et du groupe vinyle ; et e est un monool, qui est identique ou différent de d, qui comprend l'addition d'unités répétées formées par la réaction de polyaddition du groupe polyester a au groupe isocyanate organique c et ayant des groupes isocyanate organiques c aux deux extrémités d'une autre unité répétée formée par la réaction de polyaddition du groupe isocyanate organique c au groupe b d'au moins un membre sélectionné parmi le groupe constitué des diamines et des diols afin de former ainsi un polymère ayant les groupes isocyanate organiques c aux deux extrémités ; et l'addition du monool d ayant au moins un groupe fonctionnel sélectionné parmi le groupe constitué du groupe hydroxyle, du groupe carboxyle, du groupe (méth)acryloyle et du groupe vinyle au groupe isocyanate organique à une extrémité dudit polymère et du monool e, qui est identique ou différent dudit monool d, au groupe isocyanate organique à une autre extrémité dudit polymère.

10. Processus de production d'un prépolymère d'uréthane selon la revendication 8 ou 9, dans lequel ledit groupe polyester est au moins un membre sélectionné parmi le groupe constitué des groupes représentés par les formules suivantes :
- [OC₃₄H₆₆COORO]ⱼ-
et
- [OC₃₄H₆₈COORO]ⱼ-
dans lesquelles R représente un groupe alkylène ayant de 2 à 36 atomes de carbone ; et j est un entier déterminé sur la base dudit poids moléculaire moyen en nombre.

11. Processus de production d'un prépolymère d'uréthane selon la revendication 8 ou 9, dans lequel ledit groupe isocyanate organique c est au moins un membre sélectionné parmi le groupe constitué du groupe diisocyanate d'isophorone, du groupe diisocyanate d'hexaméthylène, du groupe diisocyanate de norbornane, du groupe diisocyanate de tolylène, du groupe diisocyanate de xylylène, du groupe diisocyanate de triméthylhexaméthylène, du groupe diisocyanate de xylylène hydrogéné, du groupe diisocyanate de diphénylméthane hydrogéné et du groupe diisocyanate de diphénylméthane.

12. Processus de production d'un prépolymère d'uréthane selon la revendication 8 ou 9, dans lequel ledit monool d est au moins un membre sélectionné parmi le groupe constitué des (méth)acrylates d'hydroxyalkyle, des éthers vinyliques d'hydroxyalkyle, des monoalcools contenant des groupes carboxyle, de l'alcool laurique et de l'isooctanol.

13. Processus de production d'un prépolymère d'uréthane selon la revendication 8 ou 9, dans lequel ledit monool e est au moins un membre sélectionné parmi le groupe constitué des (méth)acrylates d'hydroxyalkyle, des éthers vinyliques d'hydroxyalkyle, des monoalcools contenant des groupes carboxyle, de l'alcool laurique, de l'isooctanol, des alcools d'alkyles linéaires représentés par la formule C_{q}H_{2q+1}OH (dans laquelle q est de 1 à 18), des alcools d'isoalkyles, des alcools d'alkyles secondaires, des alcools d'alkyles tertiaires et des phénylcétones hydroxylées.

14. Processus de production d'un prépolymère d'uréthane selon la revendication 9, dans lequel ladite diamine b est au moins un membre sélectionné parmi le groupe constitué du diaminopropane, du diaminobutane, de la nonanediamine, de l'isophoronediamine, de l'hexaméthylènediamine, de la diphénylméthanediamine hydrogénée, de l'éther de bisaminopropyle, du bisaminopropyléthane, de l'éther de diéthylène glycol bisaminopropylique, de l'éther de polyéthylèneglycol bisaminopropylique, du bisaminopropoxynéopentyle glycol, de la diphénylméthanediamine, de la xylylènediamine, de la toluènediamine et de la silicone modifiées aux deux extrémités par un groupe amino, et ledit diol b est au moins un membre sélectionné parmi le groupe constitué de l'éthylène glycol, du polyéthylène glycol, du propylène glycol, du polypropylène glycol, du butylène glycol, du polytétraméthylène glycol, du pentanediol, de l'hexanediol, de la silicone modifiée aux deux extrémités par un groupe hydroxyle et des diols contenant des groupes carboxyle.

15. Adhésif sensible à la pression comprenant en tant que composant principal un polymère préparé par la réticulation du prépolymère d'uréthane selon la revendication 1 afin d'augmenter son poids moléculaire.

16. Adhésif sensible à la pression selon la revendication 15, dans lequel ladite réticulation du prépolymère est opérée en présence d'au moins un membre sélectionné parmi le groupe constitué d'agents de réticulation, d'initiateurs de polymérisation et d'énergie active.

17. Adhésif sensible à la pression selon la revendication 16, dans lequel ladite énergie active est au moins une énergie sélectionnée parmi le groupe constitué des rayonnements ultraviolets, des rayonnements visibles et de la chaleur.

18. Adhésif sensible à la pression selon la revendication 16, dans lequel au moins un des monools d et e dans ledit prépolymère d'uréthane est un (méth)acrylate d'hydroxyalkyle et ledit initiateur de polymérisation est au moins un initiateur de polymérisation photoradical sélectionné parmi le groupe constitué de l'hydroxycyclohexylphényle cétone, de la 1-phényl-2-hydroxy-2-méthylpropan-1-one, de la 2,2-diméthoxy-2-phénylacétophénone, de la benzophénone, de la 2-méthyl[4-(méthylthio)phényl]-2-morpholino-1-propanone, de la 2-hydroxy-2-méthyl-1-phénylpropan-1-one, de la 1-(4-isopropylphényl)-2-hydroxy-2-méthylpropan-1-one, de la 4-(2-hydroxyéthoxy)phényl-(2-hydroxy-2-propyl) cétone, de la 4-(2-acryloyloxyéthoxy)phényl-(2-hydroxy-2-propyl) cétone, de la 4-(2-méthacryloyloxyéthoxy)phényl-(2-hydroxy-2-propyl) cétone et de l'oxyde de 2,4,6-triméthylbenzoyldiphénylphosphine ou un initiateur de polymérisation à la chaleur sélectionné parmi le groupe constitué du peroxyde de dilauroyle, du peroxyde de dibutyle, du peroxyde de dicumyle, du peroxyde de t-butylcumyle, du α,α-bis(t-butylperoxy-m-isopropyl)benzoate et du 2,5-diméthyl-2,5-di(t-butylperoxy)-hexane.

19. Adhésif sensible à la pression selon la revendication 16, dans lequel au moins un desdits monools d et e dans ledit prépolymère d'uréthane est un éther vinylique d'hydroxyalkyle et ledit initiateur de polymérisation est au moins un initiateur de polymérisation cationique induite par les rayonnements sélectionné parmi le groupe constitué des sels de sulfonium aromatiques, du sel de p-hydroxyphényle benzylméthylsulfonium et du sel de p-méthoxycarbonyloxyphényle diméthylsulfonium.

20. Adhésif sensible à la pression selon la revendication 16, dans lequel au moins un desdits monools d et e dans ledit prépolymère d'uréthane est un monoalcool contenant des groupes carboxyle ou ledit b est un diol carboxylé et ledit agent de réticulation est au moins un composé époxy sélectionné parmi le groupe constitué du A-diglycidyle éther de bisphénol, du A-diglycidyle éther de bisphénol hydrogéné, du F-diglycidyle éther de bisphénol, du F-diglycidyle éther de bisphénol hydrogéné, du S-diglycidyle éther de bisphénol, du S-diglycidyle éther de bisphénol hydrogéné, de l'éther diglycidylique d'acide phtalique, de l'éther diglycidylique d'acide phtalique hydrogéné, de l'éther diglycidylique d'éthylène glycol, de l'éther diglycidylique de diéthylène glycol, de l'éther diglycidylique de triéthylène glycol, de l'éther diglycidylique de tétraéthylène glycol, de l'éther diglycidylique de polyéthylène glycol, de l'éther diglycidylique de propylène glycol, de l'éther diglycidylique de dipropylène glycol, de l'éther diglycidylique de tripropylène glycol, de l'éther diglycidylique de polypropylène glycol, de l'éther diglycidylique de butanediol, de l'éther diglycidylique de polytétraéthylène glycol #250, de l'éther diglycidylique d'hexanediol, de l'éther diglycidylique de nonanediol, l'époxyde de novolaque phénolique et l'époxyde de novolaque de crésol.

21. Adhésif sensible à la pression selon la revendication 16, dans lequel ledit b dans ledit prépolymère d'uréthane est une diamine et ledit agent de réticulation est un polyisocyanate.
